# EUROPEAN PATENT SPECIFICATION

(11) **EP 1 423 227 B1**
(45) Date of publication and mention of the grant of the patent: **15.07.2009**
(21) Application number: 02751587.3
(22) Date of filing: 17.07.2002
(51) Int. Cl.: B22D 27/06, H05H 1/48

(54) **RISER(S) SIZE REDUCTION AND/OR METAL QUALITY IMPROVING IN GRAVITY CASTING OF SHAPED PRODUCTS BY MOVING ELECTRIC ARC**
STEIGLEITUNGSGRÖSSENREDUZIERUNG UND/ODER METALLQUALITÄTSVERBESSERUNG BEIM SCHWERKRAFTGIESSEN VON FORMKÖRPERN DURCH BEWEGEN EINES LICHTBOGENS
REDUCTION DE LA TAILLE DE LA OU DES MASSELOTTES ET/OU AMELIORATION DE LA QUALITE DU METAL DANS LA COULEE PAR GRAVITE DE PRODUITS FORMES A L'AIDE D'UN ARC ELECTRIQUE MOBILE

(30) Priority: 18.07.2001 IL 14442201
(43) Date of publication of application: 02.06.2004
(73) Proprietor: Netanya Plasmatec Ltd., Netanya South 42504 (IL)
(72) Inventor: DVOSKIN, Pavel, 42342 Netanya (IL); ZLOCHEVSKY, Valery, 42480 Netanya (IL); NADAM, Dror, 40697 Eyn-Sarid (IL)
(74) Representative: Gervasi, Gemma
(86) International application number: PCT/IL2002/000584
(87) International publication number: WO 2003/008143

(56) References cited:
- WO-A-89/07499
- CH-A- 497 932
- CH-A- 571 372
- US-B1- 6 169 265

## Description

### Field of the Invention

The present invention relates to improvements in the casting of both ferrous and non-ferrous metals.

More particularly, the invention provides an apparatus and a method for reducing the volume of risers, and for the possibility of reducing shrinkage blowhole and porosity here and after defined as "voids" in shaped gravity casting, for example: sands, permanent or semi permanent mold casting. In some cases grain size, porosity and inclusion reduction and better homogeneity and structure can be achieved.

### Background of the Invention

Gravity casting of shaped finished product (GCSP) from metal is most commonly done in sand or permanent or semi-permanent mold casting. The products usually do not subjected to any further plastic processing, except some machining and heat treatment, if needed.

The GCSP is based on casting metals/alloys into a shaped mold by gravity. In sand casting, for example, the mold is made of sand and clay which hardened previous to the casting in a pattern. The mold is disposable/recyclable and should be reproduced for each casting. Complicated shapes are made from several sand cores (some time refer as grains), that are put together to create the pattern. In accordance therewith a permanent mold is usually made out of at least two metal body parts that are joined together to form the pattern. This kind of mold is for multiple use. Semi-permanent molds contain both metal outer body and sand inner cores, and mainly being used for complicated shapes such as cylinder heads.

For manufacturing defect free castings and to compensate for volume shrinkage during the solidification process, several chimney-shape risers are used to create a metalostatic (hydrostatic) pressure to push the liquid metal to the shrinked areas. Since the upper part of the casting is the last to solidified and to observes all the shrinkage, a well designed casting will be one that have enough risers to compensate all the shrinkage and defects that occur during the solidification process. The risers have additional role to serves as a reservoir of a liquid metal for compensating shrinkage inside the solidifying body. For example in high quality aluminum or steel castings the weight of the risers can reach the weight of the finished product. At the end of the process the risers are cut off, discarded or remelted.

Obviously, once the metal in the riser has solidified it can no longer serve its purposes. To delay such solidification, some commercially available products have been developed. Ceramic heat-insulating sleeves can help to extend the period of riser liquidity. An exothermic powder can be applied to generate heat on the upper face of the riser, but such powder can cause casting contamination.

CH 497932 discloses a device for heating the heads of ingot moulds or the risers of casting moulds to provide a supply of molten metal to compensate for shrinkage comprises a tubular feeding jacket for fixing in the head or riser, a ceramic or ceramic lined hood on top of the jacket and an electrical resistance element which projects into the hood and is supported by a contact ring. The contact ring is divided into insulated sections to supply electric current to the electric resistance element.

Moving an electric arc according to the Invention, for example a circulating arc, acts on the top of all or selected risers, create a sufficient heat to preserve the metal reservoir in the risers molten (for longer period of time), and to produce enough pressure that enables to reduce the risers size by 60%-80%. The moving electric arc which produce liquid metal flow/stir, to compensate for the reduction in potential energy when the risers' height is reduced by 60%-80%.

The electric arc can be produced by a various meanings and electrodes, for example as describe in PCT patent application PCT/IL97/00023. This patent presents various electrode for producing circulating plasma arcs for use in casting.

It is also in the scope of the present invention to be able to increase the quality of the product, mainly to reduce porosity, and grain size, depending on the alloy and the casting. For example cast iron and some aluminum-silicon castings, have low-density areas in the casting due to porosity. In aluminum alloy casting the problem can be solved by using large amount of risers, but in cast iron it is almost inevitable. Applying the process as describe above, can reduce porosity, reduce grain size and improve mechanical properties.

The present invention achieves the above objects by providing an apparatus for producing metal flow/stir in the liquid metal, said apparatus comprising:
a) at least one plasma arc electrode for forming a continuously-moving plasma arc over the upper surface of at least one riser projecting above a metallic casting being cast; in a mold;
b) a stand for suspending said plasma arc electrode over the upper surface of said riser(s) during the casting process ;
c) a second electrode attachable to the liquid metal or to a metallic surface of the mold being used for casting, for completion of an electric circuit through metal cast in said mold to form a plasma arc; and
d) control means connected between said apparatus and a power supply and arranged to supply power to said plasma arc electrode(s) for completion of (an) electric circuit(s) including the molten metal in the mold for forming a continuously-moving plasma arc between the upper surface of each said riser and the lower face of the corresponding said first electrode, and controls connected between said apparatus and a power supply enabling control of the electric circuit(s), whereby each moving plasma arc is able to act on the top of each said riser for flowing/stirring the molten metal in each said riser."

The process of the present invention provides a method for reducing riser size and/or reducing voids, inclusions, porosity and grain size in metallic castings and for improving homogeneity therein, said method comprising
step a) casting a molten metal into a mold with at least one riser there above;
step b) providing plasma arc electrode(s) and positioning same slightly above the upper surface of molten metal in the riser(s); and
step c) connecting an electric potential to said electrode(s) to form a continuously-moving plasma arc between said electrode (s) and the upper surface of said at least one riser during the solidification process or part thereof, each moving plasma arc acting on the top of said at least one riser flowing/stirring the molten metal in each said riser.

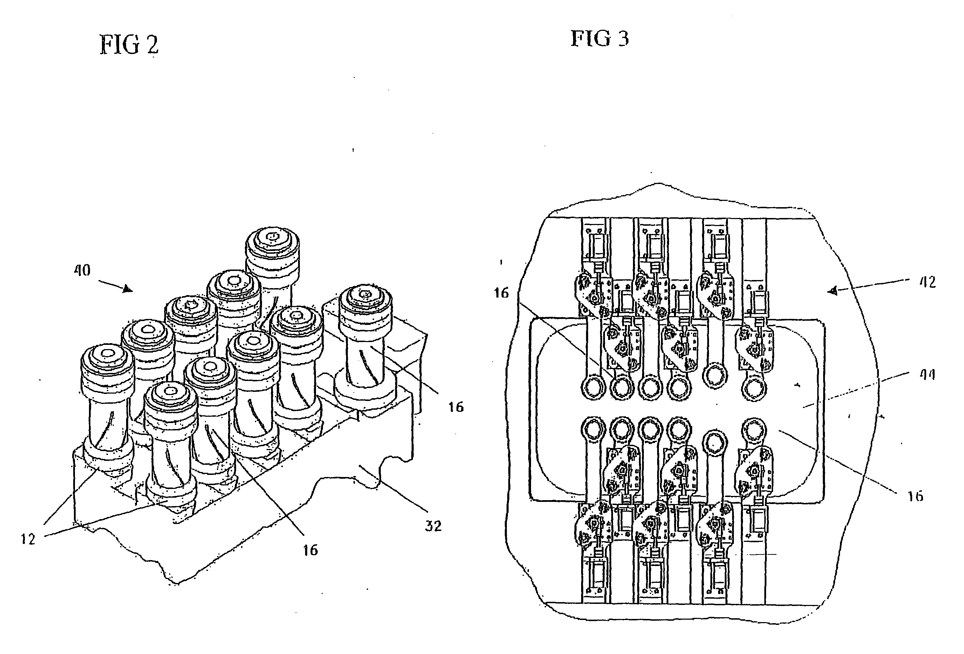

It is to be stressed that the method and apparatus to be described have been tested in practice. The size of the electrode is depended on the size of the risers, and the amount of electrodes required is depended on the geometric complicity of the product been cast. The amount of energy and the duration of the arc treatment also depended on the product. For example, a 10-electrode apparatus for the semi-permanent casting of cylinder heads in accordance with claims 1 and 5 of the present invention has been built and operated to meet the objects of the invention see FIG 2-3. For electrode with 40 mm diameter an optimum of 0.03 kWh per kg is the most suitable to produce stir/flow, heating and pressure for this semi permanent aluminum cylinder head casting.

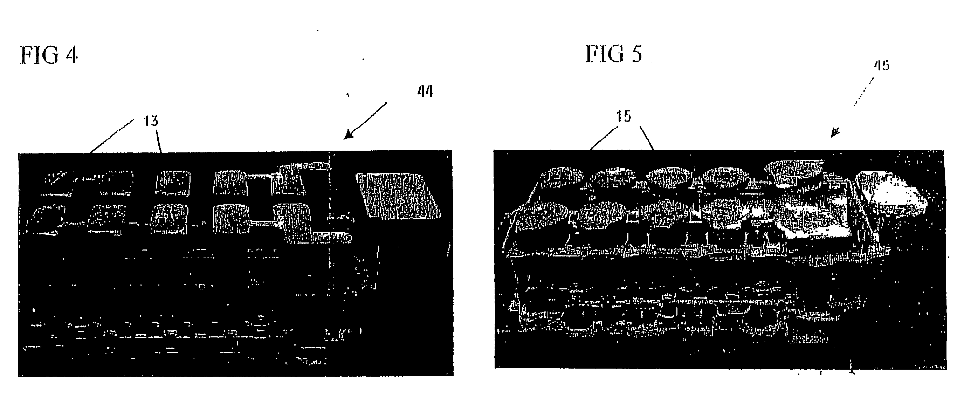

An example of riser volume reduction can be seen in FIG. 4-5.

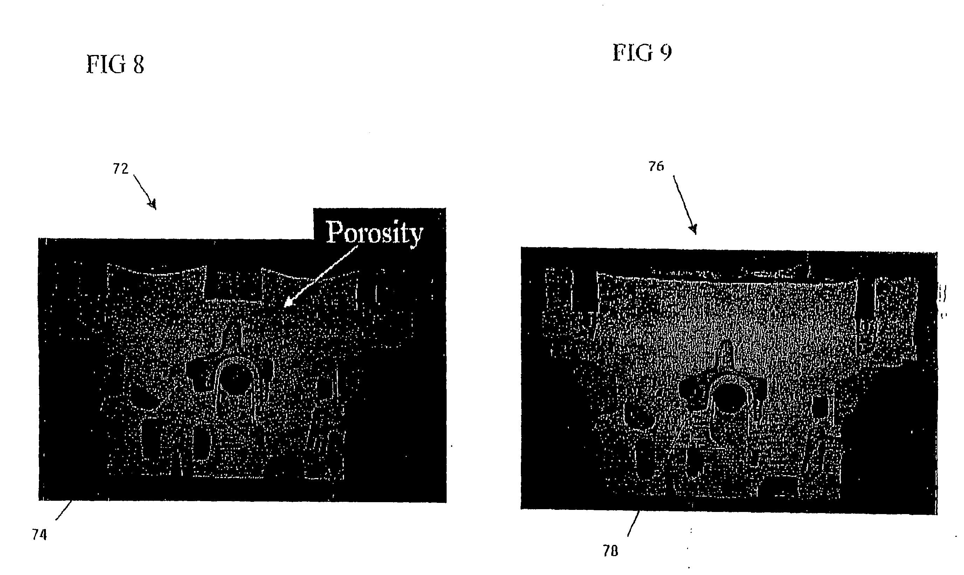

A sample for porosity reduction in the cylinder head mentioned above can be seen in FIG 8-9.

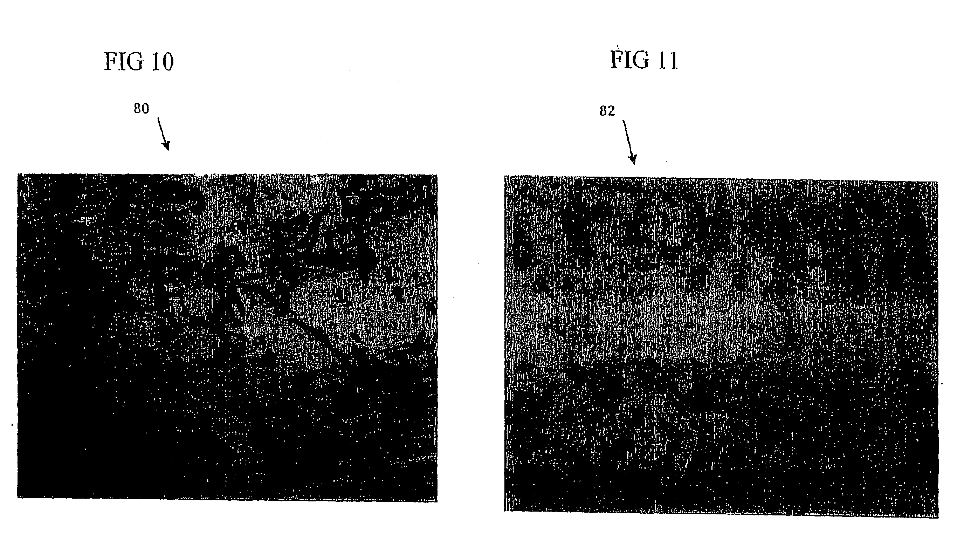

A sample for grain refinement in aluminum alloy can be seen in FIG. 10-11. An aluminum part was cast with 2 risers with and without applying moving electric arc on the top of the risers. The conventional casting FIG 10 has a coarse microstructure with coarse inter dendritic spacing while the treated part FIG 11 has much finer structure.

2 circulating arcs of 150 Amp each was applied for 120 sec (the entire solidification time).

### Short Description of the Drawings

The invention will now be described further with reference to the accompanying drawings, which represent by example preferred embodiments of the invention. Structural details are shown only as far as necessary for a fundamental understanding thereof. The described examples, together with the drawings, will make apparent to those skilled in the art how further forms of the invention may be realized.

In the drawings:
FIG. 1 is a partially-sectioned view of a preferred embodiment of the apparatus according to the invention, showing a semi-permanent mold casting being made;
FIG. 2 is a perspective view of casting manufactured by the use of a 10-electrodes apparatus;
FIG. 3 is a plan view of a 12- electrodes embodiment;
FIG. 4 is a photograph of an aluminum cylinder head of 36 kg casting produced by conventional casting;
FIG. 5 is a photograph of the same aluminum cylinder head as in FIG 4 of 26 kg casting treated by the method and apparatus of the present invention;
FIG. 6 is side view of a steel casting manufactured by conventional casting;
FIG. 7 is a side view of the same casting as seen in FIG. 6, treated by the method and apparatus of the present invention;
FIG. 8 is a photograph of an aluminium cylinder head slice of 26 kg casting produced by conventional casting;
FIG. 9 is a photograph of the same aluminum cylinder head slice as in FIG 8 of 26 kg casting treated by the method and apparatus of the present invention;
FIG. 10 is a microstructure photograph of an aluminum alloy casting manufactured by conventional casting;
   and
FIG. 11 is a microstructure photograph of the same aluminium alloy casting as seen in FIG. 10 treated by the method and apparatus of the present invention.

### Detailed Description of the Invention

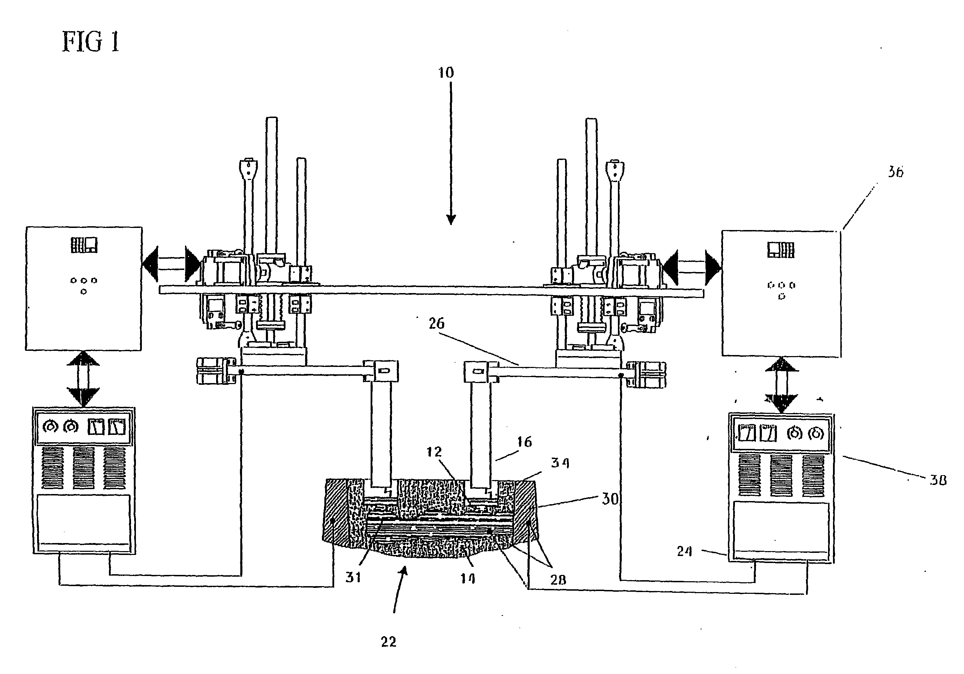

There is seen in FIG. 1 a metal casting apparatus 10 for reducing the size of risers 12 in discrete metal castings, and in some alloys for reducing voids, inclusions, porosity and grain size therein. Also, homogeneity is improved as will be seen in FIG. 11. In the present embodiment a semi permanent mold casting 22 is being treated.
The diagram shows an apparatus 10 carrying two plasma arc first electrodes 16, which are positioned about 2 - 20 mm above the upper surface of molten metal in risers 12. A terminal 24 is attached to the first electrode 16.
A stand 26 suspends each first electrode 16 as needed.
A second electrode 28 is attached to a metallic surface 30 of the mold 22 being used for casting, or to the molten metal 31 directly. The second electrode 28, connected to the other terminal line, completes an electric circuit passing through molten metal 31 cast in the mold 22 through a plasma arc 34 to be formed between the upper surface of each riser 12 and the lower face of the corresponding first electrode 16.
Electronic control means 36 are provided, for adjusting the electrical parameters, connected to the first and second electrodes 16, 28. Control means 36 are connected to an appropriate power supply 38.
On connection of power to the plasma arc electrodes 16, 28, electric circuits are formed through and by generation of the plasma arcs 34. The gap between the upper surface of the risers 12, and the lower surface of the corresponding first electrode 16, is bridged by the continuously-moving plasma arc 34, which flow/stir the molten metal in the mold 22. The control means 36 connected between the apparatus 10 and the power supply 38 enable an operator to control the electric parameters flowing in the electric circuits.

With reference to the rest of the figures, similar reference numerals have been used to identify similar parts.

Referring now to FIG. 2, there is seen a cylinder-head casting 32, being treated by the use of a multi-head apparatus 40. The apparatus 40 is similar to the apparatus 10, described in FIG. 1, arranged for 10 first electrodes 16 each over a riser 12.

FIG. 3 illustrates a 12-electrodes embodiment 42, showing how closely the electrodes 16 can be spaced where many risers are necessary to produce a high quality casting 44.

Seen in FIG. 4 is a photograph of an aluminum alloy cylinder head 44 weighing 36 kg which was produced by conventional casting, with 10 risers 13 of 14 kg.

FIG. 5 is a photograph 45 of the same size aluminum alloy cylinder head 45 treated by the method and apparatus of the present invention, with 10 smaller risers 15 of 4 kg.

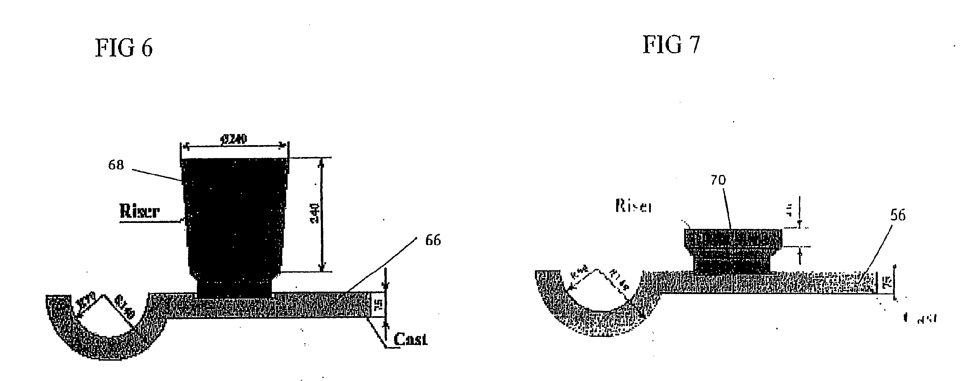

FIG. 6 shows a conventionally-cast shield casting 66 about 77 cm long, made of tool steel. Typical wall thickness is 50 - 75 mm. The casting 66 without the riser 68 weighs 170 kg, and was produced using a 240 mm diameter riser 68 which weighed 140 kg when discarded. By use of the apparatus 10 seen in FIG. 1 the same size 170 kg casting 56 was produced through the use of the much smaller riser 70 seen in FIG. 7. The riser 70 seen in

FIG 7 when discarded weighed 26 kg, 19% of the riser 68 seen in FIG. 6.

Seen in FIG. 8 is a photograph 72 of an aluminium alloy cylinder head slice 74 weighing 26 kg which was produced by conventional casting. Unacceptable porosity is seen in the upper section of the picture.

FIG. 9 is an photograph 76 of the same size aluminium alloy cylinder head slice 78 treated by the method and apparatus of the present invention. No porosity is evident in the photograph 76, due to the flowing/stirring action of the plasma arc

FIG 10 is a microstructure photograph 80 of a sample fragment taken from an aluminium alloy casting, including 7% silicon, manufactured by conventional casting. The eutectic structure is coarse in comparison with FIG. 11.

FIG. 11 is a microstructure photograph 82 at the same magnification showing the microstructure of the same aluminium alloy taken from a casting treated by the method and apparatus of the present invention. The finer eutectic structure and improved homogeneity are evident.

The present invention also includes methods of producing the improved castings described, and in particular for achieving this while using dramatically smaller risers. The methods can be implemented using the apparatus described previously.

The scope of the described invention is intended to include all embodiments coming within the meaning of the following claims. The foregoing examples illustrate useful forms of the invention, but are not to be considered as limiting its scope, as those skilled in the art will readily be aware that additional variants and modifications of the invention can be formulated without departing from the meaning of the following claims.

## Claims

1. A metal casting apparatus for reducing the size of risers and/or improving quality in discrete metal castings, the apparatus comprising:
a) at least one plasma arc electrode for forming a continuously-moving plasma arc over the upper surface of at least one riser projecting above a metallic casting being cast in a mold;
b) at least one stand for suspending said at least one plasma arc electrode;
c) a second electrode attachable to a metallic surface of said mold being used for casting or to the cast metal, for completion of an electric circuit through metal cast in said mold to form a plasma arc; and
d) control means connected between said apparatus and a power supply and arranged to supply power to said plasma arc electrode(s) for completion of (an) electric circuit(s) including the molten metal in the mold for forming a continuously-moving plasma arc between the upper surface of each said riser and the lower face of the corresponding said first electrode, and controls connected between said apparatus and a power supply enabling control of the electric circuit(s), whereby each moving plasma arc is able to act on the top of each said riser for flowing/stirring the molten metal in each said riser."

2. A metal casting apparatus as claimed in claim 1, wherein the number of risers is 12.

3. A metal casting apparatus as claimed in claim 1, wherein at least one plasma arc electrode is positioned about 2-20 mm above the upper surface of molten metal in risers.

4. A metal casting apparatus as claimed in claim 1, wherein said castings are sand castings.

5. A metal casting apparatus as claimed in claim 1, wherein said castings are produced in permanent molds.

6. A metal casting apparatus as claimed in claim 1, wherein said castings are produced in semi-permanent molds.

7. A metal casting method for reducing the size of required risers, and/or improving quality of casting, said method comprising:
step a) casting a molten metal into a mold with at least one riser there above;
step b) providing plasma arc electrode(s) and positioning same slightly above the upper surface of the molten metal in the riser (s); and
step c) connecting an electric potential to said electrode(s) to form a continuously-moving plasma arc between said electrode (s) and the upper surface of said at least one riser during the solidification process or part thereof, each moving plasma arc acting on the top of said at least one riser flowing/stirring the molten metal in each said riser.

8. A casting method as claimed in claim 7, wherein said electric power applied to said electrode to form said plasma arc produces a current of at least 50A.

## Patentansprüche

1. Metallgussvorrichtung zur Reduzierung der Größe von Steigern und/oder zur Verbesserung der Qualität bei einzelnen Metallgussstücken, wobei diese Apparatur umfasst:
a) mindestens eine Plasmalichtbogenelektrode zur Ausbildung eines sich kontinuierlich bewegenden Plasmalichtbogens über die Oberseite von mindestens einem Steiger, welcher über einem Metallgussstück, welches in einer Gießform gegossen wird, absteht;
b) mindestens eine Haltevorrichtung zum Aufhängen der genannten mindestens einen Plasmalichtbogenelektrode;
c) eine zweite Elektrode, welche an einer Metallfläche der genannten, zum Gießen benutzten Gießform oder an dem gegossenen Metall angebracht werden kann, damit ein elektrischer Stromkreis durch das in der genannten Gießform gegossene Metall hindurch geschlossen wird, so dass sich ein Plasmalichtbogen bildet; und
d) Steuerungsmittel, welche zwischen die genannte Vorrichtung und eine Stromversorgungseinheit geschaltet und dergestalt ausgelegt sind, dass sie an die genannte/n Plasmalichtbogenelektrode/n die Leistung abgeben, damit unter Einbeziehung des gegossenen Metalls in der Gießform ein oder mehrere elektrische Stromkreise geschlossen werden zur Ausbildung eines sich kontinuierlich bewegenden Plasmalichtbogens zwischen der Oberseite eines jeden der genannten Steiger und der Unterseite der entsprechenden genannten ersten Elektrode, sowie Steuervorrichtungen, die zischen die genannte Vorrichtung und eine Stromversorgungseinheit geschaltet sind und die Steuerung des/der elektrischen Stromkreise/s ermöglichen, wodurch jeder sich bewegende Plasmalichtbogen in die Lage versetzt wird, auf der Oberseite eines jeden der genannten Steiger das Fließen/Umrühren des geschmolzenen Metalls in jedem der genannten Steiger zu bewirken.

2. Metallgussapparatur nach Anspruch 1, bei welcher die Anzahl der Steiger 12 ist.

3. Metallgussapparatur nach Anspruch 1, bei welcher mindestens eine Plasmalichtbogenelektrode etwa 2 - 20 mm oberhalb der Oberseite des geschmolzenen Metalls in den Steigern angeordnet ist.

4. Metallgussapparatur nach Anspruch 1, bei welcher die genannten Güsse Sandgüsse sind.

5. Metallgussapparatur nach Anspruch 1, bei welcher die genannten Güsse in Kokillen hergestellt werden.

6. Metallgussapparatur nach Anspruch 1, bei welcher die genanten Güsse in Halbkokillen hergestellt werden.

7. Metallgießverfahren zur Reduzierung der Größe der erforderlichen Steiger und/oder zur Verbesserung der Qualität des Gussstücks, wobei das genannte Verfahren umfasst:
Schritt a) Gießen eines geschmolzenen Metalls in eine Gießform mit mindestens einem Steiger darüber;
Schritt b) Bereitstellung einer oder mehrere Plasmalichtbogenelektroden und Positionierung derselben geringfügig oberhalb der Oberseite des geschmolzenen Metalls in dem/den Steiger/n; und
Schritt c) Anlegen eines elektrischen Potenzials an die genannte/n Elektrode/n, damit ein sich kontinuierlich bewegenden Plasmalichtbogen zwischen der/den Elektrode/n und der Oberseite des genannten mindestens einen Steigers während des Erstarrungsvorgangs oder eines Teils davon ausbildet, wobei jeder sich bewegende Plasmalichtbogen auf der Oberseite des genannten mindestens einen Steigers das Fließen/Umrühren des geschmolzenen Metalls in jedem der genannten Steiger bewirkt.

8. Gießverfahren nach Anspruch 7, bei welchem die genannte elektrische Leistung, welche an die genannte Elektrode angelegt wird, um den genannten Plasmalichtbogen zu bilden, eine Stromstärke von mindestens 50 A erzeugt.

## Revendications

1. Appareil de coulée de métal destiné à réduire la taille de masselottes et/ou améliorer la qualité de pièces coulées métalliques distinctes, l'appareil comprenant :
a) au moins une électrode à arc plasma pour former un arc plasma à mouvement continu sur la surface supérieure d'au moins une masselotte en saillie au-dessus d'une pièce coulée métallique coulée dans un moule ;
b) au moins un support pour suspendre ladite au moins une électrode à arc plasma ;
c) une seconde électrode pouvant être fixée à une surface métallique dudit moule utilisé pour la coulée ou au métal coulé, pour réaliser un circuit électrique à travers le métal coulé dans ledit moule pour former un arc plasma ; et
d) des moyens de commande connectés entre ledit appareil et une alimentation électrique et agencés pour fournir de l'électricité à ladite ou auxdites électrode(s) à arc plasma pour réaliser un ou des circuit(s) électrique(s) comprenant le métal en fusion dans le moule pour former un arc plasma à mouvement continu entre la surface supérieure de chaque dite masselotte et la face inférieure de ladite première électrode correspondante, et des commandes connectées entre ledit appareil et une alimentation électrique permettant la commande du ou des circuit(s) électrique(s), moyennant quoi chaque arc plasma en mouvement est capable d'agir sur la partie supérieure de chaque dite masselotte pour faire s'écouler/agiter le métal en fusion dans chaque dite masselotte.

2. Appareil de coulée de métal selon la revendication 1, dans lequel le nombre de masselottes est 12.

3. Appareil de coulée de métal selon la revendication 1, dans lequel au moins une électrode à arc plasma est positionnée environ 2 à 20 mm au-dessus de la surface supérieure du métal en fusion dans les masselottes.

4. Appareil de coulée de métal selon la revendication 1, dans lequel lesdites pièces coulées sont des pièces coulées au sable.

5. Appareil de coulée de métal selon la revendication 1, dans lequel lesdites pièces coulées sont fabriquées dans des moules permanents.

6. Appareil de coulée de métal selon la revendication 1, dans lequel lesdites pièces coulées sont fabriquées dans des moules semi-permanents.

7. Appareil de coulée de métal destiné à réduire la taille de masselottes nécessaires, et/ou améliorer la qualité de pièce coulée, ledit procédé comprenant les étapes consistant à :
a) couler un métal en fusion dans un moule avec une masselotte ou des masselottes au-dessus de celui-ci ;
b) fournir une ou des électrode(s) à arc plasma et positionner celle(s)-ci légèrement au-dessus de la surface supérieure du métal en fusion dans la ou les masselotte(s) ; et
c) connecter un potentiel électrique à ladite ou auxdites électrode(s) pour former un arc plasma à mouvement continu entre ladite ou lesdites électrode(s) et la surface supérieure de ladite au moins une masselotte au cours du procédé de solidification ou une partie de celui-ci, chaque arc plasma en mouvement agissant sur la partie supérieure de ladite au moins une masselotte, faisant s'écouler/agitant le métal en fusion sur chaque dite masselotte.

8. Procédé de coulée selon la revendication 7, dans lequel ladite énergie électrique appliquée sur ladite électrode pour former ledit arc plasma produit un courant d'au moins 50 A.
